# EUROPÄISCHE PATENTSCHRIFT

(11) **EP 3 323 497 B1**
(45) Veröffentlichungstag und Bekanntmachung des Hinweises auf die Patenterteilung: **22.05.2019**
(21) Anmeldenummer: 16199053.6
(22) Anmeldetag: 16.11.2016
(51) Int. Cl.: B01D 53/94

(54) **BESCHICHTETER KATALYSATOR**
COATED CATALYST
CATALYSEUR REVÊTU

(43) Veröffentlichungstag der Anmeldung: 23.05.2018
(73) Patentinhaber: Umicore AG & Co. KG, 63457 Hanau-Wolfgang (DE)
(72) Erfinder: HENGST, Christoph, 35510 Butzbach (DE); SCHIFFER, Michael, 63450 Hanau (DE)

(56) Entgegenhaltungen:
- WO-A1-99/47260
- WO-A1-2005/000452
- DE-T5-112013 006 665
- US-A1- 2005 143 258
- US-A1- 2009 149 323
- US-A1- 2012 301 376

## Beschreibung

Die Erfindung betrifft einen ein Abgaskatalysator, der einen Monolithen mit parallelen Kanälen und zwei voneinander verschiedene katalytische Beschichtungen aufweist, wobei der Monolith in definierten Abschnitten beschichtet ist.

### Stand der Technik

Abgase aus Motoren werden mit Abgaskatalysatoren gereinigt. Im Automobilbereich werden üblicherweise Abgaskatalysatoren eingesetzt, die einen Monolithen aufweisen, der mit einer oder mehreren katalytischen Beschichtungen ausgestattet ist. Der Monolith weist eine wabenförmige Struktur (Bienenwaben-, Honeycomb-Struktur) auf, wobei die Abgase durch dünne, parallele Kanäle strömen, die auf der Innenseite katalytisch beschichtet sind. Katalytische Beschichtungen für Abgaskatalysatoren enthalten u.a. Edelmetalle und sind daher relativ teuer. Die Beschichtung der Monolithen erfolgt üblicherweise, indem eine Suspension mit den Katalysatorkomponenten, die als Washcoat bezeichnet wird, in geeigneter Viskosität hergestellt wird und in den Monolithen eingesaugt wird. Solche Verfahren sind im Stand der Technik bekannt und werden beispielsweise in der US 8,302,557 B2 beschrieben.

Da die Katalysatoren und Beschichtungen relativ teuer sind, wurden im Stand der Technik Verfahren vorgeschlagen, um die eingesetzten Mengen zu verringern.

Die US 8,501,661 B2 schlägt vor, die Kanäle nur in definierten Abschnitten mit Katalysatorbeschichtungen auszustatten. Dabei wird vorgeschlagen, unterschiedliche Beschichtungen jeweils von unterschiedlichen Seiten in den Monolithen einzusaugen. Als Produkt wird ein Abgaskatalysator erhalten, bei dem ein Abschnitt auf der Einlassseite mit einer ersten Beschichtung und auf der Auslassseite mit einer zweiten Beschichtung ausgestattet ist. Das Verfahren kann dabei auch so durchgeführt werden, dass die Beschichtungen in einem Teilbereich überlappen. Die in dem Dokument beschriebenen Katalysatoren haben den Vorteil, dass die katalytischen Beschichtungen nicht über die gesamte Länge der Kanäle aufgetragen werden, wodurch Material eingespart wird. Allerdings hat dies zur Folge, dass die jeweilige Beschichtung auch nur in Teilbereichen des Katalysators aktiv ist. Dies führt zu einer Verminderung der Leistung im Vergleich zu Katalysatoren, die durchgängig mit beiden Beschichtungen ausgestattet sind.

Die US 7,524,465 B2 beschreibt ebenfalls Abgaskatalysatoren, die in Teilbereichen mit überlappenden Katalysator-Beschichtungen ausgestattet sind. Auch bei diesen Katalysatoren wird Material eingespart, wodurch aber die Katalysatorleistung vermindert wird. Siehe dazu auch DE 11 2013 006665 T5. Abgaskatalysatoren mit mehreren Beschichtungen, die überlappen und nur in Teilbereichen der Kanäle vorhanden sind, werden auch in der US 7,476,417 B2 offenbart. Die US 6,599,570 B1 schlägt vor, verschiedene Katalysatoren in verschiedenen aneinander angrenzenden Abschnitten aufzutragen. Es wird jedoch nicht offenbart oder belegt, dass solche Ausgestaltungen zu einer verbesserten Katalysatoreffizienz führen. Die US 2009/0149323 A1 offenbart ein Verfahren, bei dem eine katalytische Beschichtung in Form eines Kegelstumpfes auf einen Monolithen aufgetragen wird. Dies ist möglich, wenn bei der Herstellung der Washcoat aus einem Behälter mit inverser Struktur zugeführt wird, oder wenn bei der Herstellung in Teilbereichen des Monolithen physische Barrieren eingesetzt werden. Dadurch liegt in der axialen Mitte, wo der Abgasstrom vergleichsweise hoch ist, insgesamt eine höhere Katalysatordichte vor als in der axialen Peripherie, wo der Abgasstrom schwächer ist. Insgesamt kann daher Katalysatormaterial eingespart werden, wobei die katalytische Effizienz nicht in gleichem Maße abnimmt. Allerdings ist der Katalysator noch verbesserungsbedürftig, da nur Teilbereiche des Monolithen zur katalytischen Abgasreinigung genutzt werden.

Bei bekannten Katalysatoren, die als Rußpartikelfilter dienen, ist auch nachteilig, dass bei deren Regeneration eine relativ lange Aufwärmphase (Aufheizphase) erforderlich ist, um eine optimale Betriebstemperatur zu erreichen. Die Regeneration von Rußpartikelfiltern muss in regelmäßigen Abständen erfolgen, um eine Verstopfung des Filters mit den Partikeln zu verhindern und die Partikel abzubauen. Die Regeneration erfolgt bei relativ hohen Temperaturen von bis zu 650°C. Da in Rußpartikelfiltern solche hohen Temperaturen bei regulärem Betrieb üblicherweise nicht erreicht werden, müssen Sie durch zusätzliche Maßnahmen eingestellt werden. Daher ist es vorteilhaft, wenn eine Regeneration bei möglichst niedrigen Temperaturen durchgeführt werden kann und wenn die Aufheizphase bei der Regeneration relativ kurz ist. Bereits in der Aufheizphase der Regeneration sollten Abgase aus dem vorgeschalteten Verbrennungsmotor auch bei relativ geringer Temperatur unterhalb 300 °C effizient katalytisch umgesetzt werden. Die Temperatur im Abgaskatalysator steigt während der Aufheizphase, weil die katalytische Reaktion exotherm ist. Der Katalysator sollte in der Aufheizphase möglichst schnell seine optimale Betriebstemperatur erreichen, die üblicherweise oberhalb 150 °C liegt. Daher ist es wünschenswert, dass ein Abgaskatalysator in der Aufheizphase relativ schnell durch die exotherme Reaktion eine große Wärmemenge freisetzt. Um diesen Zweck zu erreichen, werden bei bekannten Katalysatoren relativ große Katalysatormengen eingesetzt. Das schnelle Erreichen der Betriebstemperatur ist vor allem bei Dieselkatalysatoren von hoher Bedeutung. Dabei ist auch von Bedeutung, dass die Temperaturerhöhung vorhersehbar und konstant ist. Auf diese Weise kann erreicht werden, dass die Regeneration möglichst effizient, vollständig und schnell erfolgt, und dadurch den regulären Betrieb des Katalysators möglichst wenig beeinträchtigt. Es wäre wünschenswert, einen Abgaskatalysator bereitzustellen, der bei der Regeneration auch mit vergleichsweise geringen Katalysatormengen nach einer kurzen und effizienten Aufheizphase die gewünschte optimale Betriebstemperatur erreicht.

Es ist auch möglich, die Wärmemenge die zur Regeneration eines Rußpartikelfilters oder eines anderen Katalysators nötig ist, mittels eines anströmseitigen Katalysators zu erzeugen. Auch in diesen Fällen ist eine vorhersehbare und konstante Temperaturerhöhung von Bedeutung.

### Aufgabe der Erfindung

Der Erfindung liegt die Aufgabe zugrunde, Abgaskatalysatoren, Verwendungen und Verfahren zu ihrer Herstellung bereitzustellen, welche die genannten Nachteile überwinden.

Es sollen Abgaskatalysatoren bereitgestellt werden, die eine möglichst sparsame und effiziente Nutzung der katalytischen Materialien ermöglichen. Es soll ermöglicht werden, bei Einsatz relativ geringer Mengen von Katalysatoren eine hohe Reinigungseffizienz der Abgase zu erreichen. Dabei ist es wünschenswert, dass verschiedene katalytische Beschichtungen kombiniert und aufeinander abgestimmt werden können.

Der Erfindung liegt insbesondere die Aufgabe zugrunde, einen Abgaskatalysator, insbesondere für Dieselmotoren, bereitzustellen, der möglichst schnell nach Beginn einer Regenerationsphase eine gewünschte optimale Betriebstemperatur erreicht. Die Aufheizphase soll also möglichst kurz sein. Der Temperaturverlauf soll möglichst vorhersehbar und konstant sein und das Aufheizen soll auch bei relativ geringen Anfangstemperaturen ermöglicht werden.

Der Erfindung liegt außerdem die Aufgabe zugrunde, einfache und effiziente Verfahren zur Herstellung solcher Abgaskatalysatoren bereitzustellen. Die Abgaskatalysatoren sollen auf einfache Weise durch übliche Verfahren zugänglich sein. Aufwendige Herstellungs-, Vor- oder Nachbearbeitungsschritte sollen so weit wie möglich vermieden werden.

### Offenbarung der Erfindung

Überraschenderweise wird die der Erfindung zugrunde liegende Aufgabe gelöst durch Abgaskatalysatoren und Verfahren gemäß den Patentansprüchen.

Gegenstand der Erfindung ist ein Abgaskatalysator, umfassend einen Monolithen mit parallelen Kanälen, wobei der Monolith
- einen ersten Abschnitt aufweist, der mit einer ersten katalytischen Beschichtung ausgestattet ist,
- einen zweiten Abschnitt aufweist, der mit einer zweiten katalytischen Beschichtung ausgestattet ist, und
- einen ersten Teilbereich aufweist, in dem der erste und zweite Abschnitt überlappen,
wobei
- der erste Abschnitt sich von der Einlass-Seite zur Auslass-Seite hin verjüngt,
- der zweite Abschnitt sich von der Auslass-Seite zur Einlass-Seite hin verjüngt, und
- der Mittelpunkt des Monolithen in dem ersten Teilbereich liegt.

Monolithen sind im Stand der Technik übliche Trägermaterialien, im Allgemeinen einstückige Keramiken, die eine Vielzahl paralleler Abgaskanäle aufweisen. Die Struktur wird auch als wabenförmig bzw. Honeycomb-Struktur bezeichnet. Die Kanäle sind auf der inneren Oberfläche mit katalytischen Beschichtungen ausgestattet. Die Abgase strömen vom Motor auf der Einlassseite in die Kanäle und durchströmen diese zur Auslassseite hin. In den Kanälen kontaktieren sie die katalytischen Beschichtungen, wobei unerwünschte Komponenten, wie Stickoxide, Kohlenmonoxid oder Kohlenwasserstoffe, reaktiv entfernt werden. Die gereinigten Abgase verlassen die Kanäle auf der gegenüberliegenden Auslassseite. Im Rahmen dieser Anmeldung ist die axiale Richtung parallel zu den Strömungskanälen.

Der erfindungsgemäße Abgaskatalysator weist zwei voneinander verschiedene katalytische Beschichtungen auf. Dies bedeutet, dass die katalytischen Beschichtungen chemisch unterschiedlich sind. Sie weisen daher auch unterschiedliche Reaktivitäten auf. Bevorzugt werden die Beschichtungen so ausgewählt, dass sie sich bei der Reinigung der Abgase in sinnvoller Weise durch ihre Funktionalitäten ergänzen. Erfindungsgemäß können weitere, zusätzliche katalytische Beschichtungen vorhanden sein.

Die erste und die zweite katalytische Beschichtung liegen jeweils nur abschnittsweise vor. Die Maßgabe, dass der Monolith Abschnitte aufweist, die beschichtet sind, bedeutet, dass in diesem Abschnitt die Kanäle des Monolithen auf der Innenseite beschichtet sind. Der erste und zweite Abschnitt überlappen in einem ersten Teilbereich des Monolithen. Dies bedeutet, dass zunächst eine Beschichtung aufgetragen wurde, wonach die zweite Beschichtung aufgetragen wurde, die in dem ersten Teilbereich über der ersten Beschichtung liegt. Solche Mehrfachbeschichtungen sind im Stand der Technik bekannt. Die Schichten weisen dabei eine ausreichende Porosität auf, damit die Abgase durch die oben gelegene Schicht in die untere Schicht gelangen können. Die Konzentrationen der Katalysatoren in der jeweiligen Beschichtung sind bevorzugt homogen.

In einer bevorzugten Ausführungsform umfasst der erste Abschnitt die gesamte Einlass-Seite und/oder der zweite Abschnitt die gesamte Auslass-Seite. Somit können beide Stirnseiten des Monolithen, d.h. die Seiten, an denen sich die Kanäle öffnen, vollständig beschichtet sein, und zwar mit dem ersten Katalysator auf einer Seite und mit dem zweiten Katalysator auf der gegenüberliegenden Seite.

Der erste Abschnitt verjüngt sich von der Einlassseite zur Auslassseite hin. Dies bedeutet, dass er sich beidseitig verjüngt. Analog verjüngt sich der zweite Abschnitt beidseitig von der Auslassseite zur Einlassseite hin. Dadurch wird erreicht, dass die Konzentration beider Katalysatoren in axialer Richtung zentral relativ hoch ist, während er peripher in axialer Richtung vergleichsweise niedrig ist. Bevorzugt nimmt dabei die Breite des ersten und zweiten Abschnitts jeweils kontinuierlich, also nicht stufenförmig oder in sonstiger Weise diskontinuierlich ab.

Der erste und zweite Abschnitt kann jede denkbare Ausgestaltung haben, bei dem sich die Breite des Abschnitts in Strömungsrichtung verjüngt. Bevorzugt weisen der erste und/oder zweite Abschnitt, bevorzugt beide Abschnitte, im Wesentlichen die Form eines Kegels oder eines Kegelstumpfes auf. Dabei kann beispielsweise für die erste Beschichtung die Einlassseite der Grundfläche des Kegels entsprechen, während die Kegelspitze auf oder nahe bei der Auslassseite liegt. Dabei können die Bereiche auch abgerundete Formen aufweisen, beispielsweise in Form eines abgerundeten Kegels oder Kegelstumpfes. Ein abgerundeter Kegel kann beispielsweise einer Ellipsenform entsprechen oder ähneln, und ein abgerundeter Kegelstumpf kann die Form einer abgeschnittenen Ellipse aufweisen oder ihr ähneln. Solche Formen werden auch als konisch verjüngt bezeichnet. Dabei bedeutet "im Wesentlichen", dass die Form übliche Unregelmäßigkeiten aufweisen kann, die durch übliche Herstellungsverfahren bedingt sind.

Der Mittelpunkt des Monolithen liegt in dem ersten Teilbereich. Der Mittelpunkt ist das Zentrum im Inneren, also die geometrische Mitte des Monolithen. Bei einem Monolithen in Zylinderform ist dies beispielsweise der Kreuzungspunkt der mittigen Achsen in axialer und in radialer Richtung. Dadurch ist die Katalysatorkonzentration in dem ersten Teilbereich höher als außerhalb des ersten Teilbereichs, wo nur die erste oder nur die zweite Beschichtung vorliegt. Auch wenn weitere Beschichtungen vorliegen, ist es besonders bevorzugt, dass die Katalysatorkonzentration in dem ersten Teilbereich insgesamt höher ist als außerhalb des ersten Teilbereichs, wo nur die erste oder nur die zweite Beschichtung vorliegt.

Erfindungsgemäß liegt also im Zentrum des Monolithen ein Teilbereich mit besonders hoher katalytischer Aktivität vor. Eine solche zentrale Zone hoher Aktivität und Temperatur ist vorteilhaft, weil in der Mitte des Katalysators der Abgasfluss hoch ist. Erfindungsgemäß wird eine zentrale Zone hoher Aktivität erhalten, in der schnell viel Wärme freigesetzt wird, die in vorteilhafter Weise auf die peripheren Bereiche des Katalysators "ausstrahlt". Eine hohe Temperatur unterstützt allgemein die Effizienz des Katalysators, was sich daran zeigt, dass die optimale Betriebstemperatur relativ hoch liegt. Bei Inbetriebnahme solcher Katalysatoren wird die optimale Betriebstemperatur erreicht, wenn durch die anfängliche exotherme Reaktion ausreichend Wärme abgegeben wird. In der zentralen Zone des erfindungsgemäßen Katalysators sind der Abgasfluss und die Reaktivität besonders hoch, so dass nach der Inbetriebnahme schnell eine hohe Temperatur erreicht wird. Die hohe Wärmeenergie im Zentrum strahlt aus in periphere Bereiche, wo weniger oder kein Katalysator vorhanden ist, und unterstützt auch dort die katalytische Reaktion. Insgesamt ist dies vorteilhaft, da die Aufheizphase im Vergleich zu herkömmlichen Katalysatoren deutlich verkürzt wird. Ein weiterer Vorteil ist, dass wegen des effizienten Aufheizens das Abgas bei relativ niedriger Temperatur in den Abgaskatalysator eingeleitet werden kann. Insgesamt wird mit relativ geringen Mengen der eingesetzten Katalysatoren eine Energieersparnis und höhere Effizienz ermöglicht.

Bevorzugt ist der gesamte erste Teilbereich in axialer und/oder in radialer Richtung, bevorzugt in beiden Richtungen, mittig gelegen. Eine in axialer Richtung zentrale Ausrichtung des ersten Teilbereichs ist vor allem vorteilhaft, wenn der Katalysator eine rotationssymmetrische Form aufweist, so dass die Abgase axial zentral eingeleitet werden. Wenn die Abgase dagegen axial seitlich eingeleitet werden, ist es bevorzugt, dass der erste Teilbereich axial entsprechend etwas seitlich liegt.

In einer bevorzugten Ausführungsform erstrecken sich die erste und/oder die zweite Beschichtung über die gesamte Länge des Abgaskatalysators (in axialer Richtung). Dies bedeutet, dass die erste Beschichtung zumindest in einem kleinen Teilbereich der Auslass-seitigen Stirnseite vorhanden ist, oder dass die zweite Beschichtung zumindest in einem kleinen Teilbereich der Einlass-seitigen Stirnseite vorhanden ist. Es ist jedoch nicht unbedingt erforderlich, dass sich beide Beschichtungen über die gesamte Länge des Abgaskatalysators erstrecken. In einer weiteren Ausführungsform ist es daher möglich, dass die erste und/oder zweite Beschichtung nicht über die gesamte Länge des Abgaskatalysators in axialer Richtung vorhanden ist. Beispielsweise ist es denkbar, dass eine Beschichtung sich nur über etwa 60 bis 99%, insbesondere über 70 bis 95% der Abgaskatalysatorlänge erstreckt. Es ist jedoch bevorzugt, dass sich die erste und zweite Beschichtung mindestens über 70%, insbesondere mindestens 80%, oder besonders bevorzugt über mindestens 90% der Länge des Abgaskatalysators erstrecken. Dadurch wird erreicht, dass der erste Teilbereich, in dem die erste und zweite Beschichtung überlappen, eine ausreichende Größe aufweist, um eine effiziente Abgasreinigung zu erreichen.

In einer bevorzugten Ausführungsform weist der Monolith auf:
- mindestens einen zweiten Teilbereich, der mit der ersten katalytischen Beschichtung und nicht mit der zweiten katalytischen Beschichtung ausgestattet ist,
- mindestens einen dritten Teilbereich, der mit der zweiten katalytischen Beschichtung und nicht mit der ersten katalytischen Beschichtung ausgestattet ist, und
- mindestens einen vierten Teilbereich, der nicht mit der ersten und zweiten katalytischen Beschichtung ausgestattet ist.

In einer bevorzugten Ausführungsform weist der Monolith auf:
- ein bis zwei zweiten Teilbereiche, die mit der ersten katalytischen Beschichtung und nicht mit der zweiten katalytischen Beschichtung ausgestattet ist,
- ein bis zwei dritte Teilbereich, der mit der zweiten katalytischen Beschichtung und nicht mit der ersten katalytischen Beschichtung ausgestattet ist, und
- einen vierten Teilbereiche, der nicht mit der ersten und zweiten katalytischen Beschichtung ausgestattet ist.

Eine solche Struktur des Monolithen wird erhalten, wenn von der Einlass- und der Auslassseite der erste und zweite Abschnitt erzeugt werden, die sich zur Mitte hin verjüngen und die sich in einem zentralen Bereich überlappen. Dann werden auf der Einlassseite ein oder zwei Teilbereiche erhalten, die nur mit der ersten katalytischen Beschichtung ausgestattet sind, während auf der Auslassseite ein oder zwei Teilbereiche erhalten werden, die nur mit der zweiten katalytischen Beschichtung ausgestattet sind. Außerdem werden vierte Teilbereiche erhalten, die axial peripher und radial zentral gelegen sind, die nicht mit der ersten oder zweiten Beschichtung beschichtet sind.

In einer bevorzugten Ausführungsform ist der vierte Teilbereich in radialer Richtung seitlich gelegen. Insgesamt kann eine gute Katalysatoreffizienz erreicht werden, selbst wenn der vierte Teilbereich nicht beschichtet sind. Dies liegt daran, dass der Abgasstrom an der radialen Peripherie geringer ist, so dass katalytische Beschichtungen an der Einlass- und Auslassseite ausreichen können, um den seitlichen Abgasstrom zu reinigen. Dabei kann die Wärme der exothermen Reaktion, die verstärkt in der Mitte im Überlappungsbereich der Beschichtungen stattfindet, auf die peripheren Regionen ausstrahlen.

Es ist aber erfindungsgemäß bevorzugt, dass der vierte Bereiche, der keine erste oder zweite Beschichtung aufweist, mit einer dritten katalytischen Beschichtung ausgestattet sind. Dies ist vorteilhaft, um das gesamte Innere des Monolithen für eine katalytische Reaktion zu nutzen.

In einer bevorzugten Ausführungsform umfasst der Monolith, bezogen auf die Gesamtfläche:
- 10% bis 80% erste Teilbereiche, die mit beiden Beschichtungen ausgestattet sind,
- 5% bis 40% zweite Teilbereiche, die nur mit der ersten Beschichtung ausgestattet sind,
- 5% bis 40% dritte Teilbereiche, die nur mit der zweiten Beschichtung ausgestattet sind, und
- 5% bis 40% vierte Teilbereiche, die nicht mit der ersten oder zweiten Beschichtung
   ausgestattet sind.

In einer besonders bevorzugten Ausführungsform umfasst der Monolith, bezogen auf die Gesamtfläche,
- 25% bis 90% erste Teilbereiche, die mit beiden Beschichtungen ausgestattet sind,
- 5% bis 25% zweite Teilbereiche, die nur mit der ersten Beschichtung ausgestattet sind,
- 5% bis 25% dritte Teilbereiche, die nur mit der zweiten Beschichtung ausgestattet sind, und
- 5% bis 25% vierte Teilbereiche, die nicht mit der ersten oder zweiten Beschichtung ausgestattet sind.

In einer Ausführungsform macht der erste Teilbereich etwa 25% bis 90% der Gesamtfläche des Monolithen aus, besonders bevorzugt etwa 50% bis 90% oder 60% bis 80%. Bei solchen Ausführungsformen sind die unbeschichteten oder nur einfach beschichteten Teilbereiche relativ klein, so dass insgesamt eine hohe katalytische Aktivität erreicht wird.

In einer Ausführungsform macht der erste bis vierte Teilbereich jeweils etwa 20 bis 30% des Monolithen aus, beispielsweise etwa 25%. Eine solche Verteilung der Teilbereiche ist möglich, wenn die erste und zweite Beschichtung von jeder Seite symmetrisch aufgetragen wird und etwa ein Viertel der Gesamtfläche ausmacht.

In einer bevorzugten Ausführungsform ist der Monolith mit mindestens einer weiteren katalytischen Beschichtung ausgestattet. Dabei ist bevorzugt jede weitere katalytische Beschichtung unterschiedlich zu der ersten und zweiten katalytischen Beschichtung. Allgemein sind beliebige Kombinationen mit weiteren Beschichtungen denkbar, welche die Effizienz verbessern. Die Anzahl der weiteren katalytischen Beschichtungen ist beliebig und wird im Hinblick auf die gewünschte Funktionalität ausgewählt. In besonderen Ausführungsformen sind eine, zwei, drei oder vier weitere Beschichtungen vorhanden.

In einer bevorzugten Ausführungsform weist der Katalysator eine dritte Beschichtung auf. Dabei kann die dritte Beschichtung über die gesamte Katalysatorfläche aufgetragen sein, beispielsweise als Grundbeschichtung oder als abschließende Überschichtung. Es ist auch denkbar, dass die dritte Beschichtung nur radial peripher vorhanden ist. Dabei ist es bevorzugt, dass die dritte Beschichtung eine niedrigere Katalysatorkonzentration aufweist als die erste und die zweite Beschichtung. Auf diese Weise ist es möglich, das gesamte Innere des Monolithen für eine katalytische Reaktion zu nutzen und gleichzeitig eine zentrale Zone mit besonders hoher Reaktivität bereitzustellen.

In einer bevorzugten Ausführungsform ist das gesamte Innere des Monolithen mit einer katalytischen Beschichtung ausgestattet. In einer bevorzugten Ausführungsform ist dabei eine dritte Beschichtung vorhanden, die mindestens in dem vierten Teilbereich vorliegt, der nicht mit der ersten oder zweiten katalytischen Beschichtung ausgestattet sind. Die dritte Beschichtung kann sich dabei über die vierten Teilbereiche hinaus erstrecken. Dabei ist von Vorteil, dass im Inneren des Monolithen keine Bereiche mehr vorhanden sind, die nicht beschichtet sind und daher nicht für eine katalytische Reaktion genutzt werden.

In einer bevorzugten Ausführungsform erstreckt sich die dritte Beschichtung in axialer Richtung von der Einlassseite bis zur Auslassseite hin. In einer bevorzugten Ausführungsform ist die dritte Beschichtung in radialer Richtung nur peripher, nicht aber in radial zentral vorhanden.

Außerdem ist denkbar, dass eine weitere Beschichtung nur in einem radial zentralen Bereich vorhanden ist, der sich über die gesamte Katalysatorlänge erstrecken könnte. Dadurch kann die Reaktivität im Zentrum noch erhöht werden und/oder es kann eine weitere Funktionalität hinzugefügt werden.

Allgemein können die beschriebenen dritten oder weiteren Beschichtungen auch miteinander kombiniert werden, vor allem um die beschriebenen Zwecke zu erreichen. Der Abgaskatalysator kann beliebige Arten von Abgasen reinigen. Bevorzugt ist der Abgaskatalysator für den Einsatz im Automobilbereich geeignet. Dabei wird er bevorzugt Verbrennungsmotoren nachgeschaltet. Der Katalysator ist bevorzugt ein Oxidationskatalysator. Er kann beispielsweise einem Dieselmotor oder Viertakt-Ottomotor nachgeschaltet sein.

In bevorzugten Ausführungsformen ist der Abgaskatalysator ein Dieseloxidationskatalysator (DOC), ein Dreiwegekatalysator (TWC), ein NOx-Speicherkatalysator (NSC), ein Katalysator zur selektiven katalytischen Reduktion von Stickoxiden (SCR) oder ein Dieselpartikelfilter (DPF).

In einer besonders bevorzugten Ausführungsform ist der Abgaskatalysator ein Dieseloxidationskatalysator (DOC). Es wurde gefunden, dass mit dem erfindungsgemäßen Katalysator die Reinigung von Dieselabgasen in besonders effizienter Weise erfolgen kann. Insbesondere wird durch eine verstärkte exotherme Reaktion im Zentrum eine bei Dieselmotoren wichtige schnelle Aufheizung des Katalysators für eine Regenerationsphase erreicht.

Die erfindungsgemäßen Abgaskatalysatoren sind zur Reinigung von Abgasen aus Motoren, insbesondere aus Dieselmotoren, geeignet. Mit den Katalysatorbeschichtungen können mittels chemischer Reaktionen gasförmige Abgaskomponenten, wie Stickoxide (NOx), CO, Kohlenwasserstoffe oder H₂S, beseitigt werden. Dabei werden vergleichsweise unschädliche Produkte erhalten, wie H₂O, CO₂ oder N₂. Der Abgaskatalysator kann dabei auch so ausgestaltet sein, dass er Partikel, insbesondere Rußpartikel, filtert oder mittels chemischer Reaktion abbaut. Der Katalysator kann auch so ausgewählt sein, dass er unerwünschte Substanzen speichert. Die allgemeine Funktion solcher Filter und die zugrunde liegenden chemischen und physikalischen Prozesse sind dem Fachmann bekannt.

Der Monolith kann aus üblichen Materialien bestehen und nach üblichen Verfahren hergestellt sein. Im Stand der Technik werden insbesondere Filter aus Keramik oder Metall eingesetzt, wobei Keramikfilter für Automobilanwendungen am meisten verbreitet sind. Bevorzugte keramische Materialien sind Kordierit, Siliciumcarbid, Siliciumnitrid, α-Aluminiumoxid, Zirconium, Zirconiumphosphat, Aluminiumtitanat, Mullit, Spodumen, Aluminiumoxid-Siliciumoxid-Magnesiumoxid oder Zirconiumsilicat. Der Monolith ist üblicherweise eine einstückige Keramik. Alternativ sind auch Ausgestaltungen mit Wänden aus Fasermaterialien möglich. Besonders bevorzugt werden Monolithen aus Kordierit oder Siliciumcarbid eingesetzt.

Die katalytischen Beschichtungen enthalten eine Katalysatorkomponente. Diese ist bevorzugt ein Edelmetall, insbesondere ausgewählt aus Palladium, Platin, Rhodium Ruthenium und/oder Iridium.

Die katalytische Beschichtung wird nach üblichen Verfahren mittels eines Washcoats aufgetragen. Dieser enthält üblicherweise eine Trägerkomponente in fein verteilter Partikelform, die insbesondere Metalloxide aufweist. Bevorzugte Trägerkomponenten sind Oxide von Aluminium, Silicium, Titan oder Zirconium. Es können auch gemischte Oxide eingesetzt werden. Weiter bevorzugt sind Siliciumoxid-Aluminiumoxid, Alumosilicate oder Aluminiumoxid-Zirconiumoxid, und gemischte Oxide von Aluminiumoxid mit seltenen Erden-Oxiden, wie Aluminiumoxid-Ceroxid. Die katalytischen Beschichtungen können Sauerstoffspeicherkomponenten enthalten. Diese sind üblicherweise Oxide von seltenen Erden, insbesondere Oxide von Cer, Lanthan, Neodym, Praseodym, Yttrium oder gemischte Oxide davon. Bei allen genannten Komponenten können gemischte Oxide oder dotierte Oxide eingesetzt werden sowie Gemische der genannten Komponenten.

Die Washcoats können übliche Zusätze enthalten, wie Stabilisatoren, insbesondere Erdalkalimetalle, oder Promoter, wie Seltene Erden.

Übliche Katalysatoren und weitere Komponenten von katalytischen Beschichtungen sind im Stand der Technik bekannt und werden beispielsweise in der US 7,524,465 B2 oder US 7,476,417 B2 beschrieben.

In einer bevorzugten Ausführungsform sind die erste und zweite katalytische Beschichtung so ausgewählt, dass sie unterschiedliche Funktionalitäten aufweisen. Dabei ist zu berücksichtigen, dass die Abgase bei Eintritt in den Abgaskatalysator zunächst im Wesentlichen mit der ersten Beschichtung in Kontakt treten, und zum Auslasssende hin zunehmend mit der zweiten Beschichtung in Kontakt treten. So kann beispielsweise durch die erste Beschichtung die Abreicherung einer ersten Komponente der Abgase erfolgen, beispielsweise von Stickoxiden, während durch die zweite Beschichtung ein zweiter Bestandteil der Abgase abgereichert wird.

In einer bevorzugten Ausführungsform enthält die erste Beschichtung Palladium, während die zweite Beschichtung Platin enthält. Dies ist vorteilhaft, weil die erste Beschichtung dann ein relativ starkes Aufheizen durch exotherme Reaktion ermöglicht, während die zweite Beschichtung in hohem Maße Stickoxide oxidiert.

In einer weiteren Ausführungsform enthält die erste Beschichtung Platin, während die zweite Beschichtung kein Edelmetall enthält und Ceroxid enthält. Dabei ist vorteilhaft, dass die erste Beschichtung Stickoxide oxidiert, während die zweite Komponente die Migration von Platin verhindert.

In einer weiteren Ausführungsform enthält die erste Beschichtung Platin, während die zweite Beschichtung als Edelmetall ausschließlich Palladium auf Ceroxid enthält. Dabei ist von Vorteil, dass die erste Beschichtung Stickoxide oxidiert, während die zweite Beschichtung als passiver NOx-Speicher dient.

Der Abgaskatalysator weist bevorzugt ein Gehäuse auf, in das der Monolith eingesetzt ist. Solche Gehäuse bestehen üblicherweise aus Stahl. Der Abgaskatalysator kann dabei übliche Verbindungsmittel oder sonstige Einreichungen, wie Mittel zur Verringerung von Vibrationen oder zur Zuführung von Reagenzien, enthalten.

Gegenstand der Erfindung ist auch die Verwendung des erfindungsgemäßen Abgaskatalysators zur Reinigung von Abgasen. Bevorzugt sind die Abgase solcher aus einem Dieselmotor. Bevorzugt erfolgt die Verwendung zur Abreicherung von Stickoxiden, Kohlenwasserstoffen und/oder Kohlenmonoxid. Insbesondere erfolgt die Verwendung für Dieselmotoren zur Beschleunigung des Aufheizvorgangs bei der Regeneration des Abgaskatalysators.

Der erfindungsgemäße Abgaskatalysator kann nach üblichen Verfahren hergestellt werden. Die Washcoats mit den katalytischen Komponenten und Trägermaterialien werden im Allgemeinen in Form einer viskosen Flüssigkeit bereitgestellt und in die Monolithen in gewünschter Menge und Verteilung eingebracht, üblicherweise durch Einsaugen. Wenn der Washcoat wie gewünscht in dem Monolithen verteilt ist, erfolgt die Verfestigung durch Trocknen und Kalzinieren.

Im Stand der Technik sind verschiedene Verfahren bekannt, um Monolithen gleichmäßig mit Beschichtungen auszustatten. Bevorzugt wird ein Verfahren eingesetzt, wie es in US 2009/0149323 A1 beschrieben wird. Dabei werden Beschichtungen in Kegelform erzeugt, indem Washcoats aus Behältnissen aufgebracht werden, welche eine analoge, spiegelverkehrte Form aufweisen. Die Washcoats werden aus den Behältern in den Monolithen eingesaugt. Dabei werden die Kanäle mit so viel Washcoat befüllt, wie oberhalb des Kanales zum Einsaugen zur Verfügung steht.

Ein anderes geeignetes Herstellungsverfahren wird in der US 5,543,181 beschrieben. Dabei werden die einzelnen Kanäle durch Besprühen von der Innenseite mit hohlen Injektionsnadeln beschichtet. Durch Bereitstellung eines Arrays von Injektionsnadeln verschiedener Länge kann insgesamt ein Beschichtungsmuster in einer gewünschten Form erzeugt werden. Das Verfahren ist jedoch relativ aufwendig ist und hat sich im Stand der Technik nicht durchgesetzt.

Zur Herstellung von kegelförmigen Beschichtungen wird außerdem auf die US 8,302,557 B2 verwiesen. Die abschnittsweise Ausstattung von Monolithen mit Katalysatorbeschichtungen wird beispielsweise auch in der US 8,501,661 B2, der US 6,599,570 B1 oder der US 7,524,465 B2 beschrieben. Beschichtungsverfahren für Monolithe werden auch in der US 7,476,417 B2 oder der EP 0 941 763 B1 beschrieben. Die darin beschriebenen Washcoats mit katalytischen Komponenten, Trägerkomponenten und Additiven, die Verfahrensbedingungen und Auftragsvorrichtungen können erfindungsgemäß eingesetzt werden.

Gegenstand der Erfindung ist auch ein Verfahren zur Herstellung eines erfindungsgemäßen Abgaskatalysators umfassend die Schritte
(a) Bereitstellen des Monolithen mit parallelen Kanälen und eines ersten und zweiten Washcoats für die erste und zweite katalytische Beschichtung,
(b) Befüllen des Monolithen mit dem ersten Washcoat von der Einlass-Seite her, so dass der Washcoat in axial zentraler Richtung weiter in den Monolithen eindringt als in axial peripherer Richtung, gefolgt von Trocknen des Washcoats,
(c) Befüllen des Monolithen mit dem zweiten Washcoat von der Auslass-Seite her, so dass der Washcoat in axial zentraler Richtung weiter in den Monolithen eindringt als in axial peripherer Richtung, gefolgt von Trocknen des Washcoats,
wobei die Schritte (b) und (c) in beliebiger Reihenfolge ausgeführt werden können.

Nach dem Auftragen und Trocknen der Washcoats erfolgt das Kalzinieren. Dabei ist es möglich, zunächst beide Washcoats aufzutragen und zu trocknen, oder nach Auftragen und Trocknen jedes Washcoats einen Kalzinierungsschritt durchzuführen.

Die folgenden Abbildungen zeigen schematisch und beispielhaft Ausführungsformen der Erfindung sowie experimentelle Ergebnisse aus den Ausführungsbeispielen:
Abbildung 1 zeigt schematisch und beispielhaft einen erfindungsgemäßen Abgaskatalysator mit kegelförmigen ersten und zweiten katalytischen Abschnitten und Zwischenprodukte bei der Herstellung.
Abbildung 2 zeigt schematisch und beispielhaft einen erfindungsgemäßen Abgaskatalysator mit ersten und zweiten katalytischen Abschnitten in Form von Kegelstümpfen und Zwischenprodukte bei der Herstellung.
Abbildung 3 zeigt schematisch und beispielhaft einen erfindungsgemäßen Abgaskatalysator mit kegelförmigen ersten und zweiten katalytischen Abschnitten und einer zusätzlichen katalytischen Beschichtung im radial peripheren Bereich, sowie Zwischenprodukte bei der Herstellung.
   Die Abbildungen 4 bis 7 zeigen den Temperaturverlauf von Abgaskatalysatoren A, B und C gemäß den Ausführungsbeispielen bei Verwendung in einem Motorprüfstand in der Aufheizphase für eine Regeneration, gemessen mit einem Pkw-Motorprüfstand an definierten Messpunkten. Die durchgezogene Linie zeigt jeweils den Temperaturverlauf des erfindungsgemäßen Abgaskatalysators A, die gepunktete Linie die des Abgaskatalysators B (Vergleich) und die gestrichelte Linie die des Abgaskatalysators C (Vergleich).

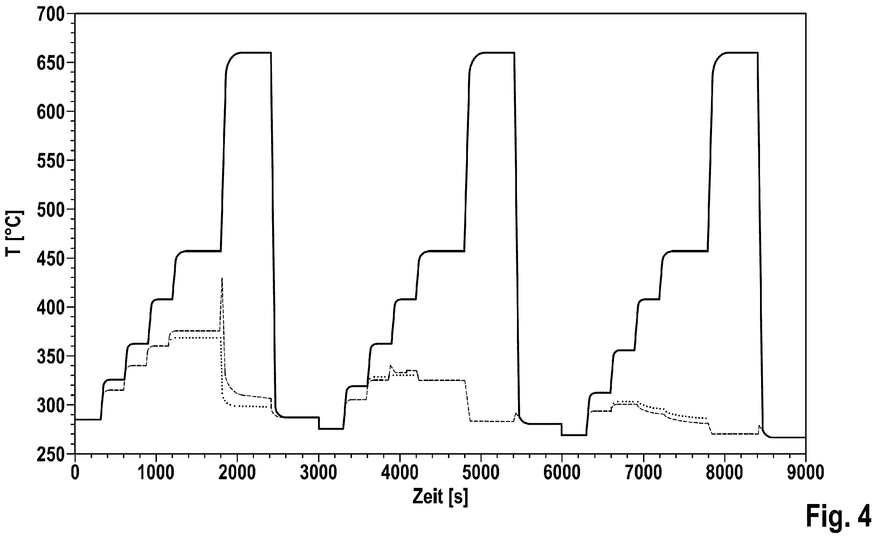

Abbildung 4 zeigt den Temperaturverlauf eines Abgaskatalysators der Erfindung in der Aufheizphase für eine Regeneration, gemessen mit einem Pkw-Motorprüfstand. Der Messpunkt liegt radial zentral und in axialer Strömungsrichtung nach einem Viertel der Länge des Monolithen.

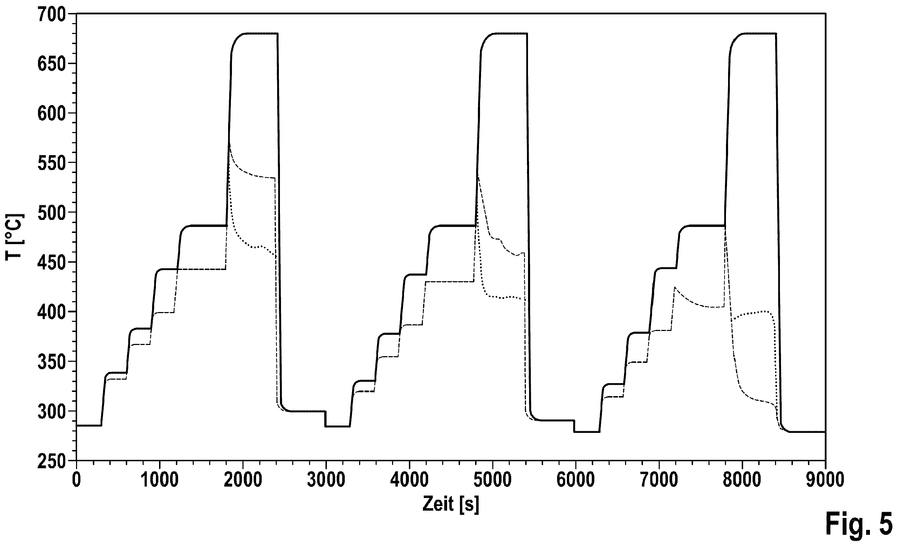

Abbildung 5 zeigt den Temperaturverlauf eines Abgaskatalysators der Erfindung in der Aufheizphase für eine Regeneration, gemessen mit einem Pkw-Motorprüfstand. Der Messpunkt liegt radial zentral und in axialer Strömungsrichtung nach zwei Vierteln der Länge des Monolithen.

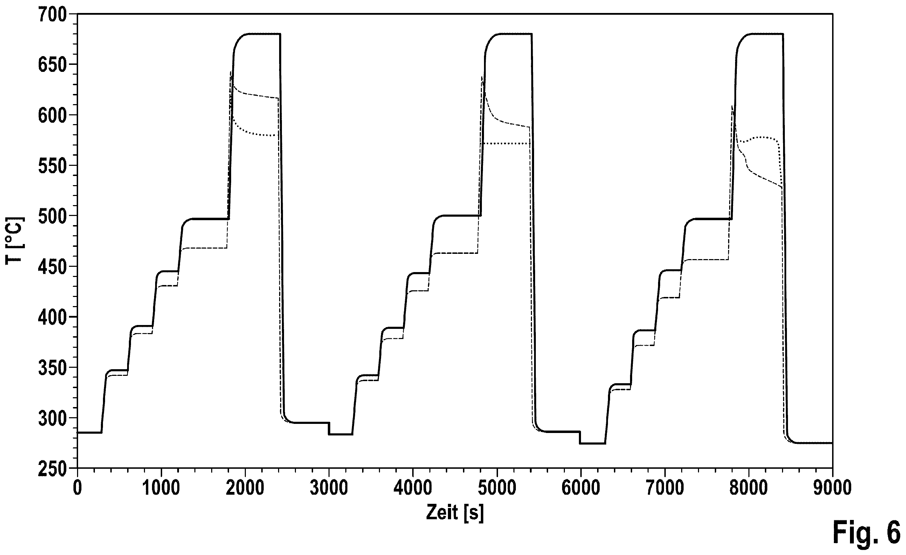

Abbildung 6 zeigt den Temperaturverlauf eines Abgaskatalysators der Erfindung in der Aufheizphase für eine Regeneration, gemessen mit einem Pkw-Motorprüfstand. Der Messpunkt liegt radial zentral und in axialer Strömungsrichtung nach drei Vierteln der Länge des Monolithen.

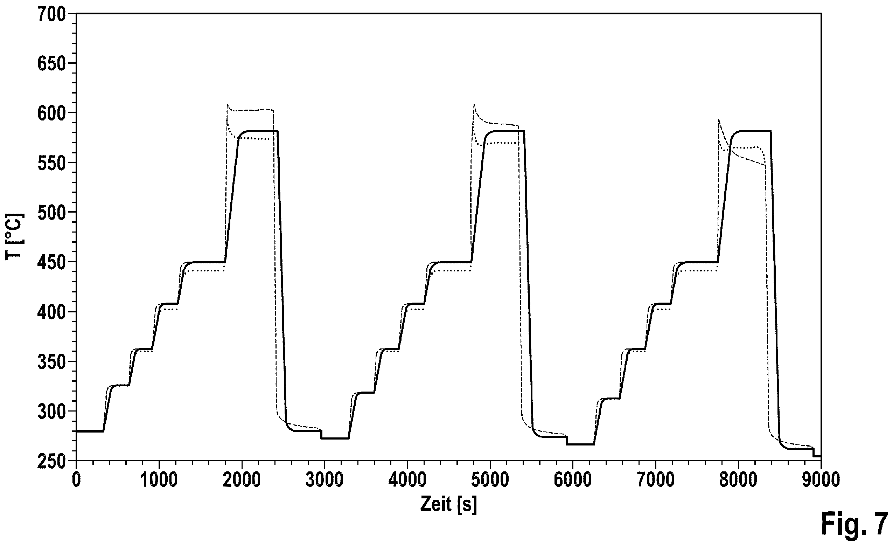

Abbildung 7 zeigt den Temperaturverlauf eines Abgaskatalysators der Erfindung in der Aufheizphase für eine Regeneration, gemessen mit einem Pkw-Motorprüfstand. Der Messpunkt liegt radial zentral und in Strömungsrichtung an der Auslassseite nach Durchströmen des Abgaskatalysators.

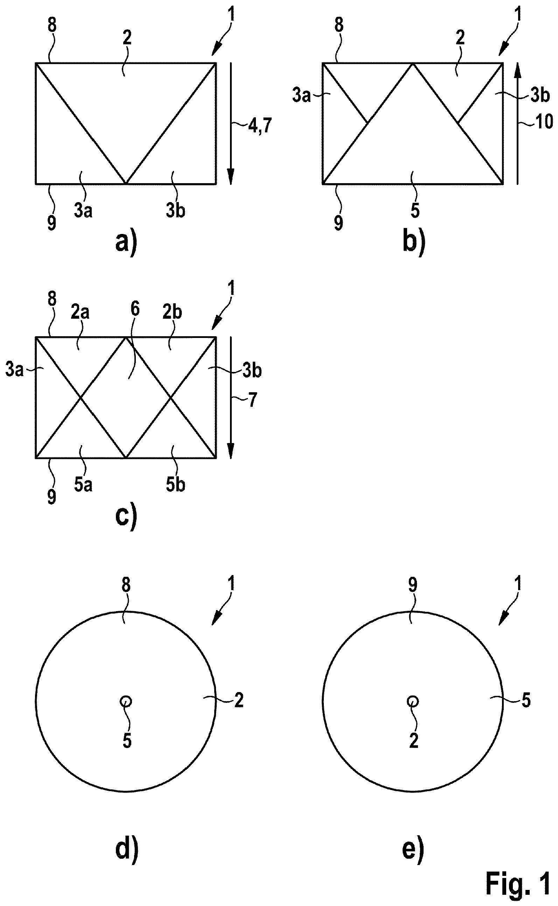

Abbildung 1 zeigt einen erfindungsgemäßen Abgaskatalysator 1 und Phasen seiner Herstellung. In Abb. 1a ist ein Zwischenprodukt der Herstellung gezeigt, bei dem der Abgaskatalysator 1 zunächst nur mit der ersten Beschichtung 2 beschichtet ist. Die Auftragung der Beschichtung erfolgte bei der Herstellung in die Richtung 4, die auch die Strömungsrichtung 7 bei der Verwendung ist. Somit ist die Einlassseite 8 vollständig beschichtet, während die Auslassseite 9 lediglich in einem kleinen Teilbereich mittig beschichtet ist. Der erste Abschnitt 2 ist kegelförmig. Der vierte Teilbereiche 3a und 3b, der bei einem zylindrischen Abgaskatalysator ein einziger Bereich ist, ist nicht mit der ersten Beschichtung beschichtet.

In der Abb. 1b ist der Abgaskatalysator 1 nach Auftragen der zweiten Beschichtung gezeigt. Der erste Abschnitt 2, auf dem die erste Beschichtung aufgetragen ist, wird teilweise vom zweiten Abschnitt 5 überdeckt, auf dem die zweite Beschichtung aufgetragen ist. Wegen der Porosität der Beschichtungen werden die Abgase aber auch von der unteren Schicht effizient gereinigt. Die Auftragsrichtung 10 der zweiten Beschichtung ist der Auftragsrichtung 4 der ersten Beschichtung entgegengesetzt. Der zweite Abschnitt 5 ist ebenfalls kegelförmig. Er erstreckt sich über die gesamte Auslassseite 9 und einen kleinen Teilbereich der Einlassseite 8. Der Abgaskatalysator ist in vierten Teilbereichen 3a und 3b nicht mit der ersten oder zweiten Beschichtung beschichtet. Er kann aber dort mit einer weiteren Beschichtung ausgestattet werden, die eine geringe katalytische Aktivität aufweist.

Die verschiedenen Teilbereiche des erfindungsgemäßen Abgaskatalysators 1 sind in der Abb. 1c schematisch dargestellt. Der Monolith umfasst einen ersten Teilbereich 6, in dem sich beide Beschichtungen überlappen, zweite Teilbereiche 2a, 2b, in denen nur die erste Beschichtung vorhanden ist, dritte Teilbereiche 5a, 5b, in denen nur die zweite Beschichtung vorhanden ist, und vierte Teilbereiche 3a, 3b, in denen keine der Beschichtung vorhanden ist. Die Strömungsrichtung 7 der Abgase verläuft von der Einlassseite 8 zur Auslassseite 9.

Der erfindungsgemäße Abgaskatalysator 1 ist vorteilhaft, weil in einem axial und radial zentralen Bereich 6 eine relativ hohe Konzentration katalytischer Beschichtungen vorhanden ist, während in peripheren Bereichen 3a, 3b kein Katalysator vorhanden ist und in anderen Bereichen 2a, 2b, 5a, 5b jeweils nur eine erste oder zweite Beschichtung mit einer gewünschten Funktionalität vorhanden ist. Bei solchen Abgaskatalysatoren ist ganz allgemein der Abgasstrom in axial zentraler Richtung besonders hoch. Wegen der hohen Katalysatordichte im Teilbereich 6 ist die exotherme Reaktion in diesem Bereich besonders stark, was zu einer hohen Wärmeentwicklung führt. Dies ermöglicht eine besonders schnelle Aufheizphase bei der Regeneration. Dabei strahlt die Wärme auf die Randbereiche aus, so dass insgesamt eine gute Aufheizung erreicht wird und ein Großteil der Abgase effizient umgesetzt wird. Die Ausgestaltung mit den ersten bis vierten Teilbereichen ist insgesamt deutlich effizienter als bei vergleichbaren Katalysatoren, bei denen der Monolith mit gleichen Mengen der Katalysatoren flächig beschichtet ist, oder bei Katalysatoren, in denen aufeinanderfolgende Abschnitte in Strömungsrichtung beschichtet sind. Die besondere exotherme Reaktion und Wärmeentwicklung in einem zentralen Bereich mit hoher Katalysatordichte wird nur erfindungsgemäß ausgenutzt. Abb. 1d zeigt einen Abgaskatalysator 1 gemäß Abb. 1b oder 1c in der Aufsicht. Die Einlassseite 8 ist weitgehend mit der ersten Beschichtung 2 ausgestattet, wobei ein zentraler kleiner Bereich 5 zusätzlich mit der zweiten Beschichtung ausgestattet ist.

Abb. 1e zeigt analog den Abgaskatalysator 1 gemäß Abb. 1b oder 1c von unten, wobei die Auslassseite 9 zu sehen ist, die vollständig mit der zweiten Beschichtung 5 ausgestattet, wobei ein kleiner zentraler Bereich auch mit der ersten Beschichtung 2 ausgestattet ist.

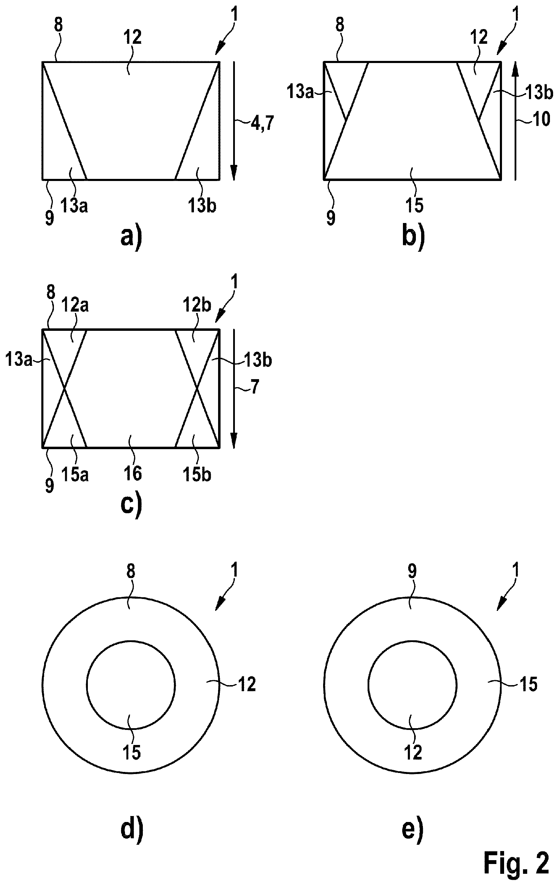

Abb. 2 zeigt einen Abgaskatalysator 1 mit Zwischenprodukten des Herstellungsverfahrens in Analogie zu Abb. 1 mit dem Unterschied, dass die ersten Abschnitte 12 und zweiten Abschnitte 15 jeweils die Form eines Kegelstumpfes aufweisen. Dies führt dazu, dass auf der Einlassseite und der Auslassseite größere Teilbereiche 12, 15 mit beiden Katalysatoren beschichtet sein (Abb. 2d, 2e). Vorteilhaft ist, dass die Teilbereiche 13a und 13b, die nicht mit der ersten oder zweiten Beschichtung ausgestattet sind, kleiner sind (Abb. 2b, 2c). Auch die einfach beschichteten Teilbereiche 12a, 12b, 15a und 15b sind vergleichsweise kleiner. Da der doppelt beschichtete erste Teilbereich 16 größer ist, wird im Vergleich zu Abb. 1 etwas weniger Katalysator eingespart.

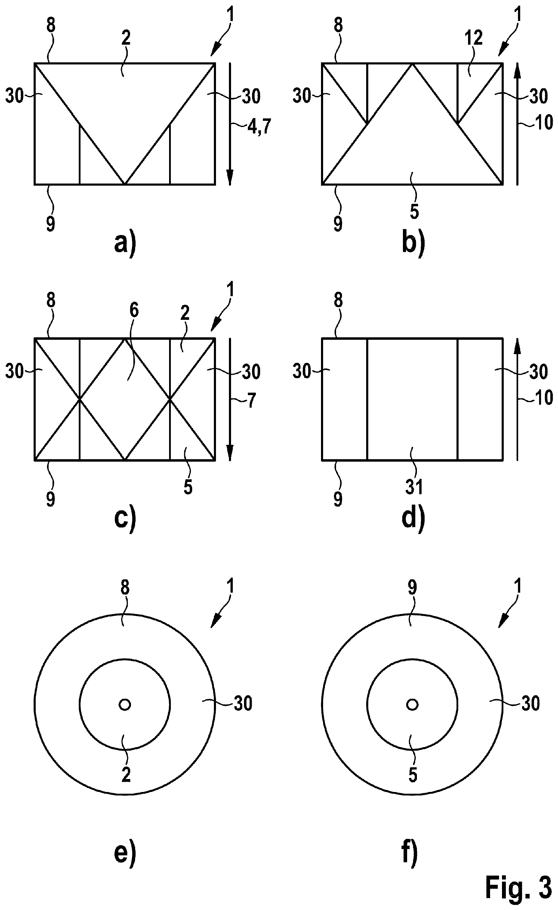

Abb. 3 zeigt einen Abgaskatalysator mit Zwischenprodukten des Herstellungsverfahrens in Analogie zu Abb. 1 mit dem Unterschied, dass eine zusätzliche dritte Beschichtung 30 vorhanden ist. Diese ist lediglich radial seitlich im Abschnitt 30, nicht aber im zentralen Abschnitt 31 vorhanden (siehe Abb. 3d) und hat den Zweck, die vierten Bereiche, die nicht mit der ersten oder zweiten Beschichtung ausgestattet sind, mit einer geringen katalytischen Grundaktivität auszustatten. Die seitliche dritte Beschichtung 30 erstreckt sich dabei durchgängig von der Einlass- zur Auslassseite. Die Abb. 3a, 3b und 3c zeigen analog zu den Abb. 1 und 2, wie die erste Beschichtung 2 und die zweite Beschichtung 5 nacheinander aufgetragen werden und dadurch jeweils teilweise die dritte Beschichtung 30 überdecken. Die Abb. 3e und 3f zeigen analog Beschichtungen auf der Einlassseite 8 und der Auslassseite 9. Diese Ausführungsform ist vor allem von Vorteil, weil sich eine solche durchgängige Beschichtung 30 einfach und gleichmäßig auftragen lässt. Es ist dabei bevorzugt, dass insgesamt das gesamte Innere des Monolithen vollständig katalytisch beschichtet ist, also dass an jeder Stelle des Monolithen mindestens eine der katalytischen Beschichtungen 2, 5 oder 30 vorliegt.

Die erfindungsgemäßen Abgaskatalysatoren, Verwendungen und Verfahren lösen die Aufgabe, die der Erfindung zugrunde liegt. Die Erfindung stellt einen Abgaskatalysator bereit, der die katalytischen Beschichtungen besonders effizient nutzt. Erfindungsgemäß können Katalysatoren mit verschiedenen Beschichtungen auf einfache Weise und nach grundsätzlich bekannten Verfahren hergestellt werden, die in einem zentralen Bereich eine hohe Katalysatordichte aufweisen. Außerdem wird es ermöglicht, auf einfache Weise Funktionalitäten verschiedener katalytischer Beschichtungen zu kombinieren und aufeinander abzustimmen. Durch die hohe Katalysatordichte im zentralen Bereich, wo auch der Abgasfluss am stärksten ist, wird über die exotherme Reaktion im Zentrum eine schnelle Aufheizphase bei der Regeneration erreicht. Dies ist insbesondere bei Dieselmotoren von hoher Bedeutung. Die Energie, die beim Aufheizen freigesetzt wird, strahlt auf die peripheren Bereiche des Abgaskatalysators aus und unterstützt auch dort die Reaktion. Insgesamt ermöglicht es die Erfindung, die Katalysatoren besonders effizient zu nutzen und daher einzusparen. Die Abgaskatalysatoren sind auf einfache Weise herstellbar und können somit reproduzierbar und kostengünstig bereitgestellt werden.

### Ausführungsbeispiele

### Beispiele 1 bis 3: Herstellung von Abgaskatalysatoren

Es wurde ein erfindungsgemäßer Abgaskatalysator A (AK-A) mit einer ersten und zweiten Beschichtung in Kegelform gemäß Abb. 1 hergestellt. Der Abgaskatalysator dient vor allem als Modell, um den Ablauf der exothermen Reaktion in der Aufheizphase einer Regenerationsphase zu untersuchen.

Zum Vergleich wurde ein Abgaskatalysator B (AK-B) hergestellt, bei dem die erste Beschichtung durchgängig von der Einlassseite des Monolithen bis zur Mitte hin, und die zweite Beschichtung durchgängig von der Auslasshälfte des Monolithen bis zur Mitte aufgetragen wurde. Beide Beschichtungen berühren sich in der Mitte des Monolithen, überlappen aber nicht. Der Monolith weist also in der ersten, einlassseitigen Hälfte nur die erste Beschichtung auf, in der zweiten Hälfte nur die zweite Beschichtung, und ist insgesamt vollständig beschichtet. Insgesamt wurde die gleiche Gesamtmenge des ersten und zweiten Katalysators eingesetzt wie für den Abgaskatalysator A.

Zum Vergleich wurde auch ein Abgaskatalysator C (AK-C) hergestellt, bei dem die erste und die zweite Beschichtung im gesamten Inneren des Monolithen aufgetragen wurden. Hierzu wurde zuerst die erste Beschichtung homogen über die komplette Breite und Länge des Katalysatorsubstrats als untere Schicht aufgebracht. Anschließend wurde die zweite Beschichtung analog zur ersten als obere Schicht darüber aufgebracht. Der Monolith ist also vollständig mit beiden Beschichtungen beschichtet. Insgesamt wurde dabei die gleiche Menge des ersten und zweiten Katalysators eingesetzt wie für den Abgaskatalysator A oder B.

### Herstellung der Washcoats (WC)

Zunächst wurden im Gebiet der Dieseloxidationskatalysatoren übliche katalytisch aktive Suspensionen nach bekannten Verfahren hergestellt:

### Washcoat 1 (WC1)

118,87 g/L eines Si-dotierten Aluminiumoxids werden mit 0,57 g/L Pt (aus einer handelsüblichen Vorläuferverbindung) und 0,57 g/L Pd (aus einer handelsüblichen Vorläuferverbindung) zu einem Washcoat verarbeitet. Der Washcoat enthält 0,95 Gewichts-% Edelmetall (Katalysator) und weist ein Gewichts-Verhältnis Pt/Pd von 1:1 auf.

### Washcoat 2 (WC2)

116,75 g/L eines Aluminiumoxids und 1,18 g/L Lanthanoxid werden mit 0,97 g/L Pt (aus einer handelsüblichen Vorläuferverbindung) und 0,16 g/L Pd (aus einer handelsüblichen Vorläuferverbindung) in einem dem Fachmann naheliegenden Prozess zu einem Washcoat verarbeitet. Der Washcoat enthält 0,95 Gewichts-% Edelmetall (Katalysator) und weist ein Gewichts-Verhältnis Pt/Pd von 6:1 auf.

### Beispiel 1: Abgaskatalysator A

Von der Einlassseite eines wabenförmigen Keramikträgers (Monolithen) werden 120 g/L WC1 kegelförmig aufgebracht. Dies entspricht einer absoluten Beschichtungsmenge von 99 g Trockenmasse bei dem verwendeten Katalysator-Substrat-Volumen von 1,65 L. Die Beschichtung wird so aufgetragen, dass die Stirnfläche der Einlassseite zu 100% von WC1 benetzt ist und die Stirnfläche der Auslassseite nur im Mittelpunkt benetzt ist, so dass die WC1-Schicht ein kegelförmiges Volumen innerhalb des zylindrischen Substrats einnimmt. Dementsprechend umgekehrt wird mit 119,06 g/L WC2 von der Auslassseite her verfahren. Dies entspricht einer absoluten Beschichtungsmenge von 98,22 g Trockenmasse bei verwendetem Katalysator-Substrat-Volumen. Das fertige Produkt besteht im Inneren somit aus zwei ineinander gekeilten Kegeln.

### Beispiel 2: Abgaskatalysator B (Vergleich)

Von der Einlassseite eines wabenförmigen Keramikträgers werden 120 g/L von WC1 auf die gesamte vordere Hälfte des Monolithen, also vollständig über 50% der Gesamtlänge aufgebracht. Dies entspricht einer absoluten Beschichtungsmenge von 99 g Trockenmasse bei dem verwendeten Katalysator-Substrat-Volumen von 1,65 L. Von der Auslassseite werden 119,06 g/L von WC2 ebenfalls vollständig über 50% der Gesamtlänge aufgebracht. Dies entspricht einer absoluten Beschichtungsmenge von 98,22 g Trockenmasse bei verwendetem Katalysator-Substrat-Volumen. Der beschichtete Monolith besteht ist also insgesamt durchgängig beschichtet und besteht aus zwei sich berührenden, gleich großen und im Querschnitt rechteckigen Katalysatorzonen.

### Beispiel 3: Abgaskatalysator C (Vergleich)

Im ersten Beschichtungsschritt wird der Monolith mit 60,00 g/L WC1 vollständig beschichtet. Dies entspricht einer absoluten Beschichtungsmenge von 99 g Trockenmasse bei dem verwendeten Katalysator-Substrat-Volumen von 1,65 L. Der WC1 wird also über die gesamte Länge aufgebracht. Im zweiten Beschichtungsschritt wird der Monolith mit 59,53 g/L WC2 darüber ebenfalls vollständig beschichtet. Dies entspricht einer absoluten Beschichtungsmenge von 98,22 g WC2 Trockenmasse bei dem verwendeten Katalysator-Substrat-Volumen. Das fertige Produkt besteht aus zwei übereinander liegenden Katalysatorschichten.

### Beispiel 4: Eigenschaften der Abgaskatalysatoren in der Aufheizphase

Das Aufheizverhalten (Aufwärmverhalten) der Abgaskatalysatoren A, B und C aus den Ausführungsbeispielen 1 bis 3 bei Verwendung als Dieseloxidationskatalysatoren zur Erzeugung einer Exothermie bei der Regeneration eines abströmseitigen Katalysators, insbesondere eines Dieselpartikelfilters, wurde an einem üblichen Pkw-Motorprüfstand untersucht (2,0 L Hubraum, 4 Zylinder, Diesel, TDI, Common Rail). Bei sekundärer Kraftstoff-Einspritzung und katalytischer Verbrennung des Kraftstoffes im Dieseloxidationskatalysator wird entsprechende Energie in Form von Wärme freigesetzt (exotherme Reaktion), um zum Beispiel eine thermische, aktive Dieselpartikelfilter-Regeneration in einer späteren, möglichen Zielapplikation zu initiieren. Im ersten Motorbetriebspunkt (MBP1) wurde eine konstante Vor-Katalysator-Temperatur von 280 °C eingestellt. Anschließend wurden in genau definierten Schritten exakt berechnete Mengen an Dieselkraftstoff eingespritzt, um eine theoretisch zu erwartende nach-Katalysator-Temperatur zu erreichen. Ziel war es dabei, zuerst in vier definierten, äquidistanten Stufen schrittweise von der gegebenen Vor-Katalysator-Temperatur von 280 °C eine Nach-Katalysator-Temperatur von etwa 450 °C zu realisieren, bevor in einer letzten Stufe eine Nach-Katalysator-Temperatur von etwa 650 °C realisiert werden soll. Dieses fünfstufige Verfahren bei einer Vor-Katalysator-Temperatur von 280 °C wird im Anschluss daran nochmals bei Vor-Katalysator-Temperaturen von 270 °C in einem Motorbetriebspunkt 2 (MBP2) und in einem Motorbetriebspunkt 3 (MBP3) bei 260 °C wiederholt. Tendenziell ist MBP3 wichtiger zu bewerten als MBP2 (und letzterer wiederum wichtiger als MBP1), da es zunehmend schwieriger ist, bei tieferer Vor-Katalysator-Temperatur die Reaktion so einzustellen, dass durch eine ausreichende und genau definierte exotherme Reaktionswärme eine genau definierte und ausreichend hohe Temperatur erreicht wird.

Die Ergebnisse der Aufheizversuche sind in den Abb. 4 bis 7 gezeigt. Die durchgezogene Linie zeigt jeweils den Temperaturverlauf des erfindungsgemäßen Abgaskatalysators A, die gepunktete Linie die des Abgaskatalysators B (Vergleich) und die gestrichelte Linie die des Abgaskatalysators C (Vergleich). Dabei wurden die Temperaturen radial zentral an unterschiedlichen Positionen des Abgaskatalysators gemessen, nämlich bei einem Viertel nach dem Einlass (drei Viertel vor dem Auslass; Abb. 4), bei zwei Vierteln nach dem Einlass (mittig, zwei Viertel vor dem Auslass; Abb. 5), bei drei Vierteln nach dem Einlass (ein Viertel vor dem Auslass; Abb. 6) und unmittelbar nach dem Auslass (Abb. 7).

Die Abb. 4 zeigt eindrucksvoll, dass im AK-A bereits 25% nach dem Katalysatoreingang in allen drei Motorbetriebspunkten die jeweils geforderten Temperaturen von etwa 450 °C sowie von etwa 650 °C durch katalytische Verbrennung des eingespritzten Diesel-Kraftstoffs auf Anhieb erreicht werden. Im Falle der Abgaskatalysatoren B und C werden im MBP1 maximal nur etwa 380 °C erreicht, im MBP2 maximal etwa 330 °C und im MBP3 maximal etwa 300 °C.

Die Abb. 5 zeigt erneut eindrucksvoll, dass im AK-A 50% nach Katalysatoreingang in allen drei Motorbetriebspunkten die jeweils geforderten Temperaturen von etwa 450 °C sowie von etwa 650 °C durch katalytische Verbrennung des eingespritzten Diesel-Kraftstoffs auf Anhieb erreicht werden. Im MBP1 werden maximal etwa 550 °C (AK-B) bzw. maximal etwa 450 °C (AK-B) erreicht, im MBP2 werden maximal etwa 480°C (AK-C) bzw. maximal etwa 400 °C (AK-B) erreicht, und im MBP3 werden maximal etwa 400 °C (AK-C) bzw. maximal etwa 380 °C (AK-B) erreicht.

Die Abb. 6 zeigt, dass im Abgaskatalysatoren A 75% nach Katalysatoreingang in allen drei Motorbetriebspunkten die jeweils geforderten Temperaturen von etwa 450 °C sowie von etwa 650 °C durch katalytische Verbrennung des eingespritzten Diesel-Kraftstoffs auf Anhieb erreicht werden, jedoch rücken die beiden Vergleichskatalysatoren B und C näher heran: im MBP1 werden maximal etwa 620 °C (AK-C) bzw. maximal etwa 580 °C (AK-B) erreicht, im MBP2 werden maximal etwa 580 °C (AK-C) bzw. maximal etwa 560 °C (AK-B) erreicht, und im MBP3 werden maximal etwa 570 °C (AK-B) bzw. maximal etwa 550 °C (AK-C) erreicht.

Die Abb. 7 zeigt vergleichend die jeweils erzielten Abgas-Temperaturen nach dem jeweiligen Katalysator. Hierbei ist festzustellen, dass sowohl der AK-A als auch AK-B eine konstante Exothermie erzeugen, wobei der Abgaskatalysator A sowohl in jedem der drei Motorbetriebspunkte als auch in jeder der beiden Ziel-Temperatur-Stufen von etwa 450 °C bzw. etwa 650 °C eine etwa 5-10°C höhere Nach-Katalysator-Temperatur gewährleistet. AK-C erzielt zwar in den MBP1 und MBP2 eine marginal höhere Nach-Katalysator-Temperatur als der AK-A, jedoch im zeigt er im MBP3 bereits ungewünschtes Lösch-Verhalten. Dies bedeutet, dass besonders im MBP3 mit fortschreitender (bezogen auf die Einspritzdauer) Diesel-Kraftstoff-Dosierung nach einem anfänglichen Temperatur-Überschwinger oberhalb der gewünschten 650 °C ("Peak") ein stetes Abfallen der Nach-Katalysator Temperatur zu erkennen ist.

Insgesamt zeigen die Ergebnisse, dass der erfindungsgemäße Abgaskatalysator, der in der Mitte eine Zone mit relativ hoher katalytischer Aktivität aufweist, eine besonders schnelle und effiziente Aufheizphase ermöglicht. Im Zentrum, wo regelmäßig der Abgasfluss am stärksten ist, wird durch die exotherme Reaktion eine besonders große Wärmeenergie frei, welche in die peripheren Bereiche ausstrahlt.

Bei dem untersuchten Modell sind die peripheren Bereiche teilweise nicht beschichtet, was dazu führt, dass die Wärmestrahlung aus dem Zentrum dort nicht zur Unterstützung einer Reaktion genutzt werden kann. Die Strahlungsenergie aus dem Zentrum kann aber in solchen peripheren Bereichen ohne weiteres genutzt werden, wenn diese mit einer weiteren katalytischen Beschichtung ausgestattet werden. So kann beispielsweise der gesamte Monolith, oder lediglich solche peripheren Bereiche, mit einer weiteren katalytischen Beschichtung ausgestattet werden. Dabei reicht es völlig aus, wenn die weitere katalytische Beschichtung nur eine relative geringe katalytische Aktivität aufweist.

## Patentansprüche

1. Abgaskatalysator (1), umfassend einen Monolithen mit parallelen Kanälen, wobei der Monolith
- einen ersten Abschnitt (2) aufweist, der mit einer ersten katalytischen Beschichtung ausgestattet ist,
- einen zweiten Abschnitt (5) aufweist, der mit einer zweiten katalytischen Beschichtung ausgestattet ist, und
- einen ersten Teilbereich (6) aufweist, in dem der erste und zweite Abschnitt (2, 5) überlappen,
wobei
- der erste Abschnitt (2) sich von der Einlass-Seite (8) zur Auslass-Seite (9) hin verjüngt,
- der zweite Abschnitt (5) sich von der Auslass-Seite (9) zur Einlass-Seite (8) hin verjüngt, und
- der Mittelpunkt des Monolithen in dem ersten Teilbereich (6) liegt.

2. Abgaskatalysator gemäß mindestens einem der vorhergehenden Ansprüche, wobei der erste und der zweite Abschnitt (2, 5) jeweils die Form eines Kegels oder Kegelstumpfes aufweisen.

3. Abgaskatalysator gemäß mindestens einem der vorhergehenden Ansprüche, wobei die Katalysatorkonzentration in dem ersten Teilbereich (6) höher ist als außerhalb des ersten Teilbereichs (6).

4. Abgaskatalysator gemäß mindestens einem der vorhergehenden Ansprüche, wobei der Monolith folgende Teilbereiche aufweist:
- mindestens einen zweiten Teilbereich (2a, 2b), der mit der ersten katalytischen Beschichtung und nicht mit der zweiten katalytischen Beschichtung ausgestattet ist,
- mindestens einen dritten Teilbereich (5a, 5b), der mit der zweiten katalytischen Beschichtung und nicht mit der ersten katalytischen Beschichtung ausgestattet ist, und
- mindestens einen vierten Teilbereich (3a, 3b), der nicht mit der ersten und zweiten katalytischen Beschichtung ausgestattet ist.

5. Abgaskatalysator gemäß Anspruch 4, wobei der erste Abschnitt (2) die gesamte Einlass-Seite (8) umfasst und der zweite Abschnitt (5) die gesamte Auslass-Seite (9) umfasst.

6. Abgaskatalysator gemäß mindestens einem der vorhergehenden Ansprüche 4 und 5, wobei der mindestens vierte Teilbereich (3a, 3b) in radialer Richtung peripher gelegen ist.

7. Abgaskatalysator gemäß mindestens einem der vorhergehenden Ansprüche, wobei der Monolith aufweist:
- zwei zweite Teilbereiche (2a, 2b), die mit der ersten katalytischen Beschichtung und nicht mit der zweiten katalytischen Beschichtung ausgestattet sind,
- zwei dritte Teilbereich (5a, 5b), der mit der zweiten katalytischen Beschichtung und nicht mit der ersten katalytischen Beschichtung ausgestattet sind, und
- zwei vierte Teilbereiche (3a, 3b), die nicht mit der ersten oder zweiten Beschichtung ausgestattet sind.

8. Abgaskatalysator gemäß Anspruch 7, wobei der Monolith, bezogen auf sein Gesamtfläche, folgende Teilbereiche aufweist:
- 10% bis 80% erste Teilbereiche (6),
- 5% bis 40% zweite Teilbereiche (2a, 2b),
- 5% bis 40% dritte Teilbereiche (5a, 5b), und
- 5% bis 40% vierte Teilbereiche (3a, 3b).

9. Abgaskatalysator gemäß mindestens einem der vorhergehenden Ansprüche, wobei der Katalysator eine dritte Beschichtung aufweist.

10. Abgaskatalysator gemäß Anspruch 9, wobei die dritte Beschichtung mindestens die vierten Teilbereiche umfasst, die nicht mit der ersten und zweiten katalytischen Beschichtung ausgestattet sind.

11. Abgaskatalysator gemäß mindestens einem der Ansprüche 9 und 10, wobei die dritte Beschichtung sich in axialer Richtung von der Einlassseite bis zur Auslassseite erstreckt.

12. Abgaskatalysator gemäß mindestens einem der vorhergehenden Ansprüche, wobei die dritte Beschichtung in radialer Richtung nur peripher, nicht aber in einem zentralen Bereich vorhanden ist.

13. Abgaskatalysator gemäß mindestens einem der vorhergehenden Ansprüche in Form eines Dieseloxidationskatalysators (DOC), eines Dreiwegekatalysators (TWC), eines NOx-Speicherkatalysators (NSC), eines Katalysators zur selektiven katalytischen Reduktion (SCR) oder eines Dieselpartikelfilters (DPF).

14. Verwendung eines Abgaskatalysators gemäß mindestens einem der vorhergehenden Ansprüche zur Reinigung von Abgasen.

15. Verfahren zur Herstellung eines Abgaskatalysators gemäß mindestens einem der vorhergehenden Ansprüche, umfassend die Schritte
(a) Bereitstellen des Monolithen mit parallelen Kanälen und eines ersten und zweiten Washcoats für die erste und zweite katalytische Beschichtung,
(b) Befüllen des Monolithen mit dem ersten Washcoat von der Einlass-Seite her, so dass der Washcoat in axial zentraler Richtung weiter in den Monolithen eindringt als in axial peripherer Richtung, gefolgt von Trocknen des Washcoats,
(c) Befüllen des Monolithen mit dem zweiten Washcoat von der Auslass-Seite her, so dass der Washcoat in axial zentraler Richtung weiter in den Monolithen eindringt als in axial peripherer Richtung, gefolgt von Trocknen des Washcoats,
wobei die Schritte (b) und (c) in beliebiger Reihenfolge ausgeführt werden können.

## Claims

1. An exhaust gas catalytic converter (1) comprising a monolith with parallel channels, wherein the monolith
- has a first segment (2) that is provided with a first catalytic coating,
- has a second segment (5) that is provided with a second catalytic coating, and
- has a first partial region (6) in which the first and second segment (2, 5) overlap,
wherein
- the first segment (2) tapers from the inlet side (8) toward the outlet side (9),
- the second segment (5) tapers from the outlet side (9) toward the inlet side (8), and
- the center point of the monolith is situated in the first partial region (6).

2. Exhaust gas catalytic converter according to at least one of the preceding claims [sic], wherein the first and second segment (2, 5) respectively have the shape of a cone or frustum.

3. Exhaust gas catalytic converter according to at least one of the preceding claims, wherein the catalyst concentration in the first partial region (6) is greater than that outside of the first partial region (6).

4. Exhaust gas catalytic converter according to at least one of the preceding claims, wherein the monolith has the following partial regions:
- at least one second partial region (2a, 2b) that is provided with the first catalytic coating and not with the second catalytic coating,
- at least one third partial region (5a, 5b) that is provided with the second catalytic coating and not with the first catalytic coating, and
- at least one fourth partial region (3a, 3b) that is not provided with the first and second catalytic coating.

5. Exhaust gas catalytic converter according to claim 4, wherein the first segment (2) comprises the entire inlet side (8), and the second segment (5) comprises the entire outlet side (9).

6. Exhaust gas catalytic converter according to at least one of the preceding claims 4 and 5,
wherein
the at least fourth partial region (3a, 3b) is situated peripherally in the radial direction.

7. Exhaust gas catalytic converter according to at least one of the preceding claims, wherein the monolith has:
- two second partial regions (2a, 2b) that are provided with the first catalytic coating and not with the second catalytic coating,
- two third partial region [sic] (5a, 5b) that are provided with the second catalytic coating and not with the first catalytic coating, and
- two fourth partial regions (3a, 3b) that are not provided with the first or second coating.

8. Exhaust gas catalytic converter according to claim 7, wherein the monolith, in relation to its total area, has the following partial regions:
- 10 % to 80 % first partial regions (6),
- 5 % to 40 % second partial regions (2a, 2b),
- 5 % to 40 % third partial regions (5a, 5b), and
- 5 % to 40 % fourth partial regions (3a, 3b).

9. Exhaust gas catalytic converter according to at least one of the preceding claims, wherein the catalytic converter has a third coating.

10. Exhaust gas catalytic converter according to claim 9, wherein the third coating comprises at least the fourth partial regions that are not provided with the first and second catalytic coating.

11. Exhaust gas catalytic converter according to at least one of the claims 9 and 10, wherein the third coating extends in an axial direction from the inlet side to the outlet side.

12. Exhaust gas catalytic converter according to at least one of the preceding claims, wherein the third coating is present only peripherally in the radial direction, but not in a central region.

13. Exhaust gas catalytic converter according to at least one of the preceding claims, in the form of a diesel oxidation catalytic converter (DOC), a three-way catalytic converter (TWC), a NOx storage catalytic converter (NSC), a catalytic converter for selective catalytic reduction (SCR), or a diesel particulate filter (DPF).

14. Use of an exhaust gas catalytic converter according to at least one of the preceding claims for purifying exhaust gases.

15. Method for producing an exhaust gas catalytic converter according to at least one of the preceding claims, comprising the steps:
(a) providing the monoliths with parallel channels and a first and second washcoat for the first and second catalytic coating,
(b) filling the monolith with the first washcoat from the inlet side so that the washcoat penetrates further into the monolith in the axially central direction than in the axially peripheral direction, followed by drying of the washcoat,
(c) filling the monolith with the second washcoat from the outlet side so that the washcoat penetrates further into the monolith in the axially central direction than in the axially peripheral direction, followed by drying of the washcoat,
wherein steps (b) and (c) may be executed in any order.

## Revendications

1. Pot catalytique (1), comprenant un monolithe pourvu de canaux parallèles, dans lequel le monolithe
- présente une première section (2), qui est munie d'un premier revêtement catalytique,
- présente une deuxième section (5), qui est munie d'un deuxième revêtement catalytique,
- présente une première partie (6), dans laquelle se chevauchent la première et la deuxième section (2, 5),
dans lequel
- la première section (2) se rétrécit depuis le côté entrée (8) vers le côté sortie (9),
- la deuxième section (5) se rétrécit depuis le côté sortie (9) vers le côté entrée (8),
- le point central du monolithe se situe dans la première partie (6).

2. Pot catalytique selon au moins l'une quelconque des revendications précédentes, dans lequel la première et la deuxième section (2, 5) présentent chacune la forme d'un cône ou d'un tronc de cône.

3. Pot catalytique selon au moins l'une quelconque des revendications précédentes, dans lequel la concentration en catalyseur dans la première partie (6) est supérieure à celle à l'extérieur de la première partie (6).

4. Pot catalytique selon au moins l'une quelconque des revendications précédentes, dans lequel le monolithe présente les parties suivantes :
- au moins une deuxième partie (2a, 2b), qui est munie du premier revêtement catalytique et pas du deuxième revêtement catalytique,
- au moins une troisième partie (5a, 5b), qui est munie du deuxième revêtement catalytique et pas du premier revêtement catalytique et
- au moins une quatrième partie (3a, 3b), qui n'est pas munie du premier et du deuxième revêtement catalytique.

5. Pot catalytique selon la revendication 4, dans lequel la première section (2) contient le côté entrée complet (8) et la deuxième section (5) contient le côté sortie complet (9).

6. Pot catalytique selon au moins l'une quelconque des revendications précédentes 4 et 5,
dans lequel ladite au moins une quatrième partie (3a, 3b) est disposée périphériquement en direction radiale.

7. Pot catalytique selon au moins l'une quelconque des revendications précédentes, dans lequel le monolithe présente :
- deux deuxièmes parties (2a, 2b), qui sont munies du premier revêtement catalytique et pas du deuxième revêtement catalytique,
- deux troisièmes parties (5a, 5b), qui sont munies du deuxième revêtement catalytique et pas du premier revêtement catalytique et
- deux quatrièmes parties (3a, 3b), qui ne sont pas munies du premier ou du deuxième revêtement.

8. Pot catalytique selon la revendication 7, dans lequel le monolithe présente les parties suivantes, par rapport à sa surface totale :
- 10 % à 80 % de première partie (6),
- 5 % à 40 % de deuxième partie (2a, 2b),
- 5 % à 40 % de troisième partie (5a, 5b) et
- 5 % à 40 % de quatrième partie (3a, 3b).

9. Pot catalytique selon au moins l'une quelconque des revendications précédentes, dans lequel le catalyseur présente un troisième revêtement.

10. Pot catalytique selon la revendication 9, dans lequel le troisième revêtement contient au moins les quatrièmes parties, qui ne sont pas munies du premier et du deuxième revêtement catalytique.

11. Pot catalytique selon au moins l'une quelconque des revendications 9 et 10, dans lequel le troisième revêtement s'étend en direction axiale du côté entrée jusqu'au côté sortie.

12. Pot catalytique selon au moins l'une quelconque des revendications précédentes, dans lequel le troisième revêtement dans la direction radiale est présent uniquement en périphérie, mais pas dans une zone centrale.

13. Pot catalytique selon au moins l'une quelconque des revendications précédentes sous la forme d'un catalyseur d'oxydation diesel (DOC), d'un catalyseur trois voies (TWC), d'un catalyseur accumulateur de NOx (NSC), d'un catalyseur pour la réduction catalytique spécifique (SCR) ou d'un filtre à particules de diesel (DPF).

14. Utilisation d'un pot catalytique selon au moins l'une quelconque des revendications précédentes pour l'épuration des gaz d'échappement.

15. Procédé de fabrication d'un pot catalytique selon au moins l'une quelconque des revendications précédentes, comprenant les étapes de
(a) préparation du monolithe pourvu de canaux parallèles et d'un premier et d'un deuxième revêtement d'imprégnation pour le premier et le deuxième revêtement catalytique,
(b) remplissage du monolithe par le premier revêtement d'imprégnation depuis le côté entrée, de manière à ce que le revêtement d'imprégnation pénètre davantage dans la direction axiale centrale dans le monolithe que dans la direction périphérique axiale, suivi d'un séchage du revêtement d'imprégnation,
(c) remplissage du monolithe par le deuxième revêtement d'imprégnation depuis le côté sortie, de manière à ce que le revêtement d'imprégnation pénètre davantage dans la direction axiale centrale dans le monolithe que dans la direction périphérique axiale, suivi d'un séchage du revêtement d'imprégnation,
dans lequel les étapes (b) et (c) peuvent être réalisées selon une séquence quelconque.
